# EUROPEAN PATENT APPLICATION

(11) **EP 4 819 014 A1**
(43) Date of publication of application: **07.10.2026**
(21) Application number: 25382336.3
(22) Date of filing: 03.04.2025
(51) Int. Cl.: G06Q 20/34

(54) **METHOD AND SMART CARD FOR PROVIDING A DIGITAL ASSET FUNCTIONALITY**

(71) Applicant: Netcetera AG, 8004 Zurich (CH)
(72) Inventor: Gatiragas, Alex, Helsinki 00180 (FI); Latorre, Azalya, Helsinki 00180 (FI); Mayor, Eduard, El Prat de Llobregat (Barcelona) (ES)
(74) Representative: LKGLOBAL Partnerschaftsgesellschaft mbB

(57) **Abstract**

The invention relates to a method for providing a digital asset functionality in a smart card (1). The method comprises providing a smart card (1) with a first applet (11) and a second applet (12). The first applet (11) is configured to enable a smart card functionality and the second applet (12) is configured to provide a digital asset functionality (S10). The invention also relates to a smart card (1) comprising a processing unit (20) and a storage unit (30). The storage unit (30) stores a first applet (11) and a second applet (12), wherein the first applet (11) is configured to enable a smart card functionality and the second applet (12) is configured to provide a digital asset functionality.

## Description

The present invention relates to the provision of digital asset functionalities in a smart card. In particular, the invention relates to a method for providing a digital asset functionality in a smart card as well as to a smart card for providing a digital asset functionality.

Card-like data carriers, in particular smart cards, are widely used in a variety of applications. For example, smart cards may be used as payment cards, credit cards, access cards or identity cards. Such cards provide a user with various functionalities like identification, authentication, payment or access to specified services, etc. Before granting access to a functionality of the smart card, authentication procedures to authenticate and verify the identity of a user of the smart card are usually required. Such authentication procedures may encompass the usage of remote identity verification processes, for example when applying for a bank account, an insurance or other security-related services. The so-called Know Your Customer (KYC) process for payment cards is an example for a compliance measure used by financial institutions to verify the identity of their customers which may involve checking an authenticity of documents or using government databases. Applying the KYC process by the respective institution may ensure that regulatory requirements are observed by the institution, while detecting and preventing money laundering or other fraudulent activities. After having completed the KYC process, the user of the smart card is enabled to perform transactions using the card, for example payment transactions at point-of-sale terminals or automated teller machines (ATMs).

It may be seen as an object of the invention to enhance the range of functionalities provided by a smart card.

A method and a smart card according to the features of the independent claims are provided. Further embodiments of the invention are evident from the dependent claims, the figures and the following description.

According to an aspect of the invention, a method for providing a digital asset functionality in a smart card is provided. The method comprises providing a smart card with a first applet and a second applet, wherein the first applet is configured to enable a smart card functionality and the second applet is configured to provide a digital asset functionality.

The inventive method may allow a smart card user to use digital asset functionalities besides other smart card functionalities, such as payment functionalities or the like. In particular, the inventive method combines a smart card functionality and a digital asset functionality in a single smart card, while ensuring a high level of security for the user. This may be achieved by combining two different applets, i.e., the first applet and the second applet, on the smart card. For example, the two applets may be stored on a chip module of the smart card which allows an independent execution of the two individual applets. The first applet may be specifically programmed to execute only one or more smart card functionalities like a payment functionality, while the second applet may be specifically programmed to execute digital asset functionalities, for example functionalities in relation to digital assets like cryptocurrencies, digital files, online accounts, digital art like Non-Fungible Tokens (NFTs), etc.

An improved security using the two different applications, i.e., applets, on the smart card may be provided by granting access to the digital asset functionality only after an access to the smart card functionality has been granted. This may include preventing an execution of the second applet before at least once executing the first applet. In other words, the second applet may be configured to activate the digital asset functionality only if the first applet has activated the smart card functionality.

The smart card may be chip card, or integrated circuit card (ICC or IC card). For example, the smart card is a so-called EMV smart card, in particular a payment card, a credit card or a debit card according to the EMV standard. The first applet may be configured to provide the smart card functionality in the form of an EMV functionality, for example allowing a user to carry out a payment transaction at a point-of-sale terminal or at an automated teller machine (ATM). The smart card may be configured to allow a payment transaction using a contact interface and/or a contactless interface of the smart card. The contactless interface may rely on a Near Field Communication (NFC) technique.

The first applet and the second applet may be applications that are stored on a single chip module or chip of the smart card and/or may be executed by a single operating system (OS) of the chip or chip module of the smart card. The first applet and/or the second applet may be an application which, for example, is written in Java and may be executed by a Java Virtual Machine (JVM) implemented in the chip of the smart card.

The first applet and the second applet may thus run on a single chip of the smart card, but an access of the first applet to the second applet and vice versa may be limited or even prevented. In particular, the first applet may be prevented from accessing any functionality that is associated to the second applet and the second applet may be prevented from accessing any functionality that is associated to the first applet. This can mean that the first applet may provide the smart card functionality, e.g., the payment functionality, while the second applet may be restricted from providing the smart card functionality, e.g. the payment functionality. Analogously, the second applet may provide the digital asset functionality, while the first applet may be restricted from providing the digital asset functionality. In other words, the functionalities provided by the first applet do not interact with the functionalities provided by the second applet and vice versa.

As described above, the smart card functionality may be an EMV functionality allowing a contact and/or contactless payment using the smart card. However, the smart card functionality may also comprise an access functionality, e.g. for providing access to internet-based identification or authentication services.

In contrast, the second applet may provide digital asset functionalities in relation to an offline storage space of the smart card for maintaining digital assets, e.g., in relation to a cold wallet digital asset. This allows the user of the smart card to securely store, manage and/or recover their digital assets using the smart card, while still enabling the user to use the payment functionality, e.g., the EMV functionality, of the smart card. Since the first applet for providing the payment functionality and the second applet for providing the digital asset functionality may operate independently of each other, a high level of data security required to store digital assets may be achieved. In particular, online access to the digital asset stored in the smart card may be prevented as the digital asset may be maintained in the offline storage, i.e. in the cold wallet, of the smart card to which only the second applet may have access.

The inventive method therefore combines payment card capabilities with cold storage digital asset custody capabilities. The user just needs to carry one smart card to carry out and leverage both functions. Furthermore, having a payment card that also has digital asset custody capabilities is a quick and cost-effective way for users to make use of digital assets. This allows financial institutions to issue payment smart cards that additionally provide their customers the option for digital asset custody, while fulfilling the security requirements in the context of using digital assets.

According to an embodiment, the method further comprises initiating an activation of the smart card functionality using the first applet, determining whether the smart card functionality is successfully activated, activating the digital asset functionality using the second applet upon determining that the smart card functionality is successfully activated, and enabling the user of the smart card to use the digital asset functionality upon activating the digital asset functionality.

This means that the usage of the digital asset functionality may only be allowed to the user when the smart card functionality has been activated. Otherwise, a usage of the digital asset functionality by the second applet may be inhibited.

The initiation of the activation of the smart card functionality using the first applet may include carrying out and/or using the smart card functionality at least once, e.g., for a first time. For example, a payment functionality provided by the first applet may be used which may trigger the activation of the smart card functionality. This may be the case where a user of the smart card uses the smart card for a payment transaction for the first time. A successful transaction would deem that the user is in possession of the smart card, has the correct PIN, and has hence previously performed a recognized identification process like for instance a so-called Know Your Customer (KYC) process. The KYC process for a payment card is an example for a compliance measure used by financial institutions to verify the identity of the user which may involve checking an authenticity of documents or using government databases. After having completed the KYC process, the user of the smart card is thus enabled to perform transactions using the smart card, for example payment transactions at point-of-sale terminals or automated teller machines (ATMs). Therefore, if the user successfully uses the smart card functionality, e.g., successfully carries out a payment transaction, using the smart card, this may be an indication that the user has successfully verified their identity. The result is that the smart card functionality provided by the first applet of the smart card is successfully activated.

Accordingly, in the step of determining whether the smart card functionality is successfully activated, the method may confirm the successful activation. At this stage, a high level of security is already provided such that the inventive method may proceed with activating the digital asset functionality using the second applet. This ensures that the digital asset functionality is provided after the high-level security requirements for activation of the smart card functionality, e.g., the payment functionality, have been complied with.

After the activation of the digital asset functionality, the user of the smart card is enabled to use the digital asset functionality, e.g., to store, manage and/or recover their digital assets using the smart card. This enabling of the usage of the digital asset functionality may be added to the usage of the smart card functionality, e.g., the payment functionality, that was already activated at an earlier stage of the method.

According to an embodiment, initiating the activation of the smart card functionality using the first applet comprises performing an initial usage of the smart card functionality at a smart card interaction device, in particular at a point-of-sale terminal.

As described above, a first (initial) payment transaction may be carried out by the user using the new smart card such that the smart card, in particular a payment functionality of the smart card, is enabled. This first payment transaction may be carried out by using a contact interface of the smart card at a payment terminal and by inputting a PIN into the payment terminal. This may activate the smart card functionality including a contactless interface of the smart card such that future payment transactions may also be carried out using the contactless interface of the smart card. Thus, if both the contact interface and the contactless interface of the smart card are enabled, this may indicate a complete activation of the smart card functionalities provided by the first applet, thereby allowing an activation of the digital asset functionality provided by the second applet afterwards.

According to an embodiment, determining whether the smart card functionality is successfully activated comprises reading an activation information provided by the first applet.

The activation information may be a tag that is set or generated once the activation of the smart card functionality provided by the first applet has been completed. The activation information may be read by a mobile device, for example a mobile phone, positioned close to the smart card, or by the second applet stored on the smart card. In the first case where the activation information may be read by a mobile device, the activation of the digital asset functionality provided by the second applet may be actively triggered by mobile device, for example by sending an activation message to the smart card which can be read by the second applet which in turn can activate the digital asset functionality. In the second case where the activation information may be (directly) read by the second applet, the activation of the digital asset functionality is triggered by the second applet without any further interaction with an external device.

According to an embodiment, reading the activation information provided by the first applet is performed by the second applet.

The activation information may be present in the form of a tag that is generated based on the activation of the smart card functionality. For example, the tag may be generated if an initial usage of the smart card functionality, e.g., a payment transaction, has been carried out using the smart card. This tag may then be read by the second applet which in turn activates the digital asset functionality. The activation of the digital asset functionality may be prevented as long as no activation information, e.g., tag, has been generated by the first applet.

According to an embodiment, determining whether the smart card functionality is successfully activated comprises determining whether a contact interface functionality of the smart card is enabled and/or whether a contactless interface functionality of the smart card is enabled.

The smart card activation (for contactless payments) may occur as a result of the user carrying out a first payment transaction at a payment terminal. In this process, the user may be asked by the payment terminal to utilize the contact interface functionality, e.g., by inserting the smart card into the payment terminal and by entering the PIN into the payment terminal. This example of activating the smart card functionality may also (automatically) activate the contactless interface functionality of the smart card for future payment transactions.

According to an embodiment, it is determined that the smart card functionality is successfully activated if both the contact interface functionality of the smart card and the contactless interface functionality of the smart card are enabled.

That is, activating the smart card functionality may include activating both the contact interface functionality of the smart card and the contactless interface functionality of the smart card such that activation of the digital asset functionality may only be provided if both the contact interface functionality of the smart card and the contactless interface functionality of the smart card have been activated.

According to an embodiment, the method further comprises preventing an activation of the digital asset functionality upon determining that the smart card functionality is not successfully activated.

In this manner, it is ensured that the digital asset functionality is only activated if the user of the smart card has carried out a successful identification verification and a successful initial usage of the smart card functionality. In other words, before usage of the digital asset functionality is enabled, the minimal security requirements for enabling usage of the smart card functionality must be fulfilled.

According to an embodiment, the method further comprises informing the user of the smart card to initiate activation of the smart card functionality upon determining that the smart card functionality is not successfully activated.

For example, the user may be informed that the smart card could generally provide digital asset functionalities and that these digital asset functionalities could be activated after the smart card functionalities have been activated. Furthermore, the user may be informed about an unsuccessful activation attempt of the smart card functionality.

According to an embodiment, the digital asset functionality is activated only if it is determined that the smart card functionality is successfully activated.

This means that activation of the digital asset functionality and/or operation of the second applet is per se prevented if no activation of the smart card functionality and/or if no full operation capability of the first applet is detected. In other words, a successful identification process and/or a first successful usage of the smart card, in particular, a first successful payment transaction using the smart card, may be required to proceed with an activation of the digital asset functionality. The detection of the activation of the smart card functionality may be performed by the second applet. If the activation of the smart card functionality was detected by the second applet, the second applet may allow access to the functionalities with respect to the digital asset.

According to an embodiment, the digital asset functionality provided by the second applet comprises a cold storage functionality for storing a digital asset on the smart card, in particular a cold wallet storage functionality for storing a cryptocurrency wallet on the smart card.

The advantage of the cold storage functionality for storing a digital asset on the smart card is that, due to the offline storage of the digital asset, a high level of security can be achieved. In particular, a digital asset wallet, encryption keys, etc. may be stored offline, i.e., without access from the internet, so that the digital asset stored on the smart card is less vulnerable to cyber-attacks, etc.

Besides the cold storage functionality, the digital asset functionality provided by the second applet may further comprise functionalities like transferring, receiving and/or swapping digital assets like for example cryptocurrencies.

According to an embodiment, the first applet is configured to execute the smart card functionality independently of an execution of the digital asset functionality by the second applet. Alternatively or additionally, the second applet is configured to execute the digital asset functionality independently of an execution of the smart card functionality by the first applet.

This means that there may be no interaction between the first applet and the second applet and, thus, also no interaction between the execution of the smart card functionality and the execution of the digital asset functionality. It may be possible that the first applet is prevented from having any access to the digital asset that is only managed by the second applet. In this manner, the security may be further improved since there may be cases where the first applet does have an internet connection and, in such cases, the offline character of the digital asset storage can be preserved by preventing the first applet to have access to the digital asset storage or to functionalities provided by the second applet. This independent execution of both applets may avoid complex certification and security concerns.

However, it may be possible that the second applet may in certain cases be able to provide a digital asset functionality which enables the second applet to fund a wallet, e.g., an EMV wallet, of the smart card managed by the first applet from the digital asset managed by the second applet. This means that the smart card storage may be separated into a first wallet managed by the first applet and a digital asset wallet managed by the second applet. In this case, the second applet may be configured to transfer a fund from the digital asset wallet to the first wallet.

According to an embodiment, the smart card comprises a chip module storing the first applet, the second applet and an operating system, wherein the operating system is configured to execute the first applet and the second applet.

In this manner, the first applet which provides the smart card functionality and the second applet which provides the digital asset functionality may be stored on the same chip module of the smart card and/or may be executed by the same operation system. In addition, the operating system may be configured to execute the first applet and the second applet independently from each other. This may avoid that the first applet accesses a digital asset storage which, preferably, is only manageable and accessible by the second applet.

According to an embodiment, the smart card functionality is a payment functionality configured to enable a payment process using the smart card.

As described above, the smart card functionality provided by the first applet may include a payment transaction carried out using the smart card.

According to an aspect of the invention, a smart card for providing a digital asset functionality is provided. The smart card comprises a storage unit. The storage unit stores a first applet and a second applet, wherein the first applet is configured to enable a smart card functionality and the second applet is configured to provide a digital asset functionality.

The inventive smart card may be used to perform the inventive method as described herein. The features and functions described with respect to the inventive method also apply to the inventive smart card.

In an example, the smart card further comprises a processing unit that is configured to initiate an activation of the smart card functionality using the first applet and to determine whether the smart card functionality is successfully activated. The processing unit is further configured to activate the digital asset functionality using the second applet, upon determining that the smart card functionality is successfully activated. The processing unit is further configured to enable the user of the smart card to use the digital asset functionality, upon activating the digital asset functionality.

Exemplary embodiments of the invention are explained in more detail below with reference to schematic drawings.
- Fig. 1: shows a schematic representation of a smart card including chip module on which a first applet and a second applet are stored.
- Fig. 2: shows a flow diagram of a method for providing a digital asset functionality in a smart card.
- Fig. 3: shows a flow diagram of a specific example of a method for providing a digital asset functionality in a smart card.

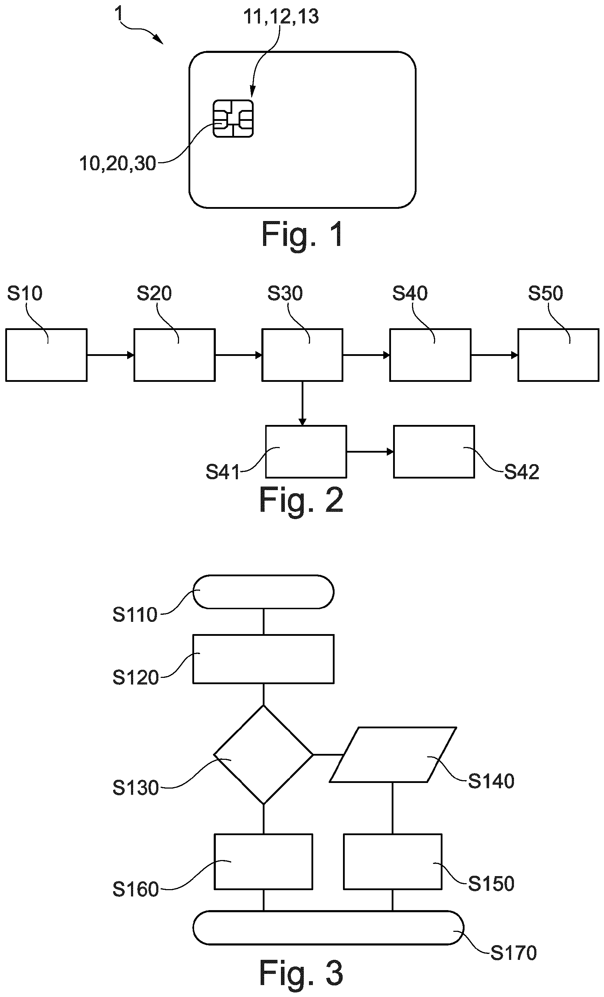

Fig. 1 shows a schematic representation of a smart card 1 including a chip module 10, herein also referred to as chip 10, on which a first applet 11 and a second applet 12 are stored. In particular, the smart card 1 may comprise a processing unit 20 and a storage unit 30 which may be parts of the chip 10. The storage unit 30 stores the first applet 11 and the second applet 12. An operating system 13 of the processing unit 20 may be configured to execute the first applet 11 and the second applet 12.

The first applet 11 may be configured to enable a smart card functionality, for example a payment functionality which can be used to carry out a payment transaction at a terminal device, for example at a point-of-sale terminal. The smart card functionality may use a contact interface or a contactless interface of the smart card 1 to carry out the payment transaction. In another example, the first applet 11 may be configured to enable a smart card functionality, for example an online payment functionality which can be used to carry out an online payment transaction using a mobile device like a smartphone, tablet, etc. In these cases, the smart card 1 is a payment card, for example a credit card or debit card. However, it is appreciated that the smart card 1, may also be an identity (ID) card that is configured to allow identification of a user of the card for certain kinds of online services, like for instance filing services or access services in general.

In addition to the first applet 11, the second applet 12 may also be stored on the same chip 10, wherein the second applet 12 is configured to provide a digital asset functionality. The digital asset functionality may include a cold storage functionality for (offline) storing a digital asset on the smart card 1, in particular a cold wallet storage functionality for (offline) storing a cryptocurrency wallet on the smart card 1. The cold storage functionality may be an offline storage functionality provided by the second applet 12 such that an internet connection between an external internet provider and the cold storage functionality is inhibited. In other words, the digital asset of a user of the smart card 1 may be stored in an offline storage medium of the chip 10 which cannot be accessed via the internet. The offline storage medium of the chip 10 may only be managed or controlled by an execution of the second applet 12 on the chip 10. In this manner, the smart card 1 advantageously provides a storage functionality for digital assets which are directly stored on the smart card 1 and which cannot be accessed via the internet. This improves the security for the digital asset storage on the smart card 1.

In addition, the digital asset functionality provided by the second applet 12 may only be enabled or activated if the smart card functionality provided by the first applet 11 has already been enabled or activated. This further improves the security for the digital asset storage on the smart card 1 since activation of the smart card functionality already indicates a high level of trust, in particular that the user of the smart card 1 is a legitimate user and not a fraudulent user. A detailed explanation as to the activation of the digital asset functionality upon the activation of the smart card functionality will be given with respect to Figures 2 and 3 below.

Fig. 2 shows a flow diagram of a method for providing a digital asset functionality in a smart card 1, in particular in the smart card 1 as described above with respect to Fig. 1.

A step S10 of the method comprises providing a smart card 1 with a first applet 11 and a second applet 12, wherein the first applet 11 is configured to enable a smart card functionality and the second applet 12 is configured to provide a digital asset functionality.

The method may comprise another step S20 of initiating an activation of the smart card functionality using the first applet.

The method may comprise another step S30 of determining whether the smart card functionality is successfully activated.

The method may comprise another step S40 of activating the digital asset functionality using the second applet, upon determining that the smart card functionality is successfully activated.

The method may comprise another step S50 of enabling the user of the smart card 1 to use the digital asset functionality, upon activating the digital asset functionality.

The method may comprise another step S41 of preventing an activation of the digital asset functionality, upon determining that the smart card functionality is not successfully activated.

This means that step S30 may be a decision step in which it is determined whether or not the smart card functionality has been successfully activated. If the result of this decision step S30 is positive, and the determination result is that the smart card functionality has been successfully activated, the method may proceed with step S40. If, however, the result of the decision step S30 is negative, and the determination result is that the smart card functionality has not been successfully activated, the method may proceed with step S41.

The method may comprise another step S42 which may follow step S41. Step S42 may comprise, upon determining that the smart card functionality is not successfully activated, informing the user of the smart card 1 to initiate activation of the smart card functionality.

The method steps may be performed in the indicated order.

Fig. 3 shows a flow diagram of a specific example of a method for providing a digital asset functionality in a smart card 1. This example may be a specific example how the method described with respect to Fig. 2 may be carried out in detail. In order to carry out this specific example of a method for providing a digital asset functionality, the smart card 1 as described with respect to Fig. 1 may be used.

The method starts with step S110, where a new smart card 1 with the above-explained functionalities (cf. Fig. 1) is provided to the user.

At step S120, the user may attempt an activation of the smart card 1. In order to activate the smart card 1, and therewith, the smart card functionality provided by the first applet 11, the user may be required to carry out and/or use the smart card functionality at least once, e.g., for a first time. For example, a payment functionality provided by the first applet 11 may be used which may trigger the activation of the smart card functionality. This may be the case where the user of the smart card 1 uses the smart card 1 for a payment transaction for the first time. A successful first transaction would deem that the user is in possession of the smart card 1, has the correct PIN, and has hence previously performed a recognized identification process like for instance a so-called Know Your Customer (KYC) process. The KYC process may even precede the step S110 of providing the smart card 1 to the user since the KYC process verifies the identity of the user which may be a prerequisite for sending the smart card 1 to the user.

However, the activation of the smart card functionality of the smart card 1 in step S120 may be initiated by performing an initial usage of the smart card functionality at a smart card interaction device, in particular at a point-of-sale terminal or at a mobile device. The first applet 11 may be used to execute the smart card functionality. For example, a first (initial) payment transaction may be carried out by the user using the new smart card 1 such that the smart card 1, in particular a payment functionality of the smart card 1, is activated. This first payment transaction may be carried out by using a contact interface of the smart card 1 at a payment terminal and by inputting a PIN into the payment terminal. The result is that the smart card functionality including a contactless interface functionality of the smart card 1 may be activated such that future payment transactions may also be carried out using the contactless interface of the smart card 1. Thus, if both the contact interface and the contactless interface of the smart card 1 are enabled, this may indicate a complete activation of the smart card functionalities provided by the first applet 11. In a specific example, an activation information, e.g., a tag, in the first applet 11 can be read to determine an activation status of the contact interface and contactless interface of the smart card 1 (e.g., an activation status the EMV side of the smart card 1). This tag reading may be performed by the second applet 12 and, based thereon, the second applet 12 may determine the activation status of the smart card functionalities of the smart card 1, and subsequently activate the digital asset functionality of the smart card 1 (e.g., activate the digital asset side of the smart card 1).

As an activation information, an interface enabling switch tag, e.g., the interface enabling switch tag DF30 of Mastercard^{®}, may be used to determine the activation status of the smart card functionality. The binary number 01 may indicate that the contactless interface is disabled, the binary number 10 may indicate that the contact interface is disabled, and the binary number 11 may indicate that both the contact interface and the contactless interfaces are enabled.

At decision step S130 it is determined whether the smart card functionality has been successfully activated in step S120. As described above, if both the contact interface and the contactless interface of the smart card 1 are enabled, this may indicate a complete activation of the smart card functionalities provided by the first applet 11.

Thus, at step S130, it may be determined if the tag has the decimal number 3 (which represents the binary number 11 corresponding to an activation of both the contact interface and the contactless interface). If this is the case, and hence both the contact interface and the contactless interface have been activated, the activation status of the smart card functionality, e.g., the activation status of the EMV side of the smart card 1, is positive, which means that the smart card functionality has been successfully activated. In this case, the method proceeds with step S140 where a flag may be set for the second applet 12 which indicates that the smart card functionality and thus the EMV side of the smart card 1 have been successfully activated. In step S150 which follows step S140, the second applet 12 may activate full usage of the digital asset functionality, e.g., full usage of the digital asset side of the smart card 1. The method ends at step S170.

However, if it is determined at step S130 that the tag does not have the decimal number 3, e.g., if the decimal number is smaller than 3, either one or both of the contact interface and the contactless interface have not yet been successfully activated. Accordingly, the method proceeds with step S160, where it is indicated that the activation status of the smart card functionality, e.g., the activation status of the EMV side of the smart card 1, is negative, which means that the smart card functionality has not been successfully activated. In this case, the user of the smart card 1 may be informed that the smart card functionality of the smart card 1 has not yet been successfully activated and that, therefore, the activation attempt to activate the digital asset functionality of the smart card 1 might have been failed. The user may also be generally notified to activate the smart card functionality before activating the digital asset functionality.

Furthermore, in some cases, the user may not be aware of the digital asset functionality provided by the smart card. Therefore, the method may further comprise a step of notifying the user to activate the digital asset functionality, for example after the smart card functionality has been activated.

It is noted that the above description of the method is merely an example and that the specifics of this method may vary as required. In particular, the tag values may differ for each payment scheme. For example, the tag parameters may be identified and programmed in the second applet 12 during personalization of the smart card 1.

## Claims

1. A method for providing a digital asset functionality in a smart card (1), comprising:
providing a smart card (1) with a first applet (11) and a second applet (12), wherein the first applet (11) is configured to enable a smart card functionality and the second applet (12) is configured to provide a digital asset functionality (S10).

2. The method of claim 1, comprising:
initiating an activation of the smart card functionality using the first applet (S20);
determining whether the smart card functionality is successfully activated (S30);
upon determining that the smart card functionality is successfully activated, activating the digital asset functionality using the second applet (S40);
upon activating the digital asset functionality, enabling the user of the smart card (1) to use the digital asset functionality (S50).

3. The method according to claim 2,
wherein initiating the activation of the smart card functionality using the first applet comprises performing an initial usage of the smart card functionality at a smart card interaction device, in particular at a point-of-sale terminal.

4. The method according to any one of claims 2 to 3,
wherein determining whether the smart card functionality is successfully activated comprises reading an activation information provided by first applet.

5. The method according to claim 4,
wherein reading the activation information provided by the first applet is performed by the second applet.

6. The method according to any one of claims 2 to 5,
wherein determining whether the smart card functionality is successfully activated comprises determining whether a contact interface functionality of the smart card (1) is enabled and/or whether a contactless interface functionality of the smart card (1) is enabled.

7. The method according to claim 6,
wherein it is determined that the smart card functionality is successfully activated if both the contact interface functionality of the smart card (1) and the contactless interface functionality of the smart card (1) are enabled.

8. The method according to any one of claims 2 to 7, comprising:
upon determining that the smart card functionality is not successfully activated, preventing an activation of the digital asset functionality (S41).

9. The method according to any one of claims 2 to 8, comprising:
upon determining that the smart card functionality is not successfully activated, informing the user of the smart card (1) to initiate activation of the smart card functionality (S42).

10. The method according to any one of the preceding claims,
wherein the digital asset functionality is activated only if it is determined that the smart card functionality is successfully activated.

11. The method according to any one of the preceding claims,
wherein the digital asset functionality comprises a cold storage functionality for storing a digital asset on the smart card (1), in particular a cold wallet storage functionality for storing a cryptocurrency wallet on the smart card (1).

12. The method according to any one of the preceding claims,
wherein the first applet is configured to execute the smart card functionality independently of an execution of the digital asset functionality by the second applet; and/ or
wherein the second applet is configured to execute the digital asset functionality independently of an execution of the smart card functionality by the first applet.

13. The method according to any one of the preceding claims,
wherein the smart card (1) comprises a chip module (10) storing the first applet (11), the second applet (12) and an operating system (13),
wherein the operating system (13) is configured to execute the first applet (11) and the second applet (12).

14. The method according to any one of the preceding claims,
wherein the smart card functionality is a payment functionality configured to enable a payment process using the smart card (1).

15. Smart card (1) for providing a digital asset functionality, comprising:
a storage unit (30);
wherein the storage unit (30) stores a first applet (11) and a second applet (12), wherein the first applet (11) is configured to enable a smart card functionality and the second applet (12) is configured to provide a digital asset functionality.
